(19) Europäisches Patentamt
European Patent Office
Office européen des brevets

(11) Publication number: **0 448 036 A1**

(12) **EUROPEAN PATENT APPLICATION**

(21) Application number: **91104233.1**

(22) Date of filing: **19.03.91**

(51) Int. Cl.5: **C08K 5/3492**, C08K 5/357, C08L 59/02

(30) Priority: **19.03.90 US 495659**

(43) Date of publication of application: **25.09.91 Bulletin 91/39**

(84) Designated Contracting States: **AT BE CH DE DK ES FR GB GR IT LI LU NL SE**

(71) Applicant: **E.I. DU PONT DE NEMOURS AND COMPANY**
**1007 Market Street**
**Wilmington Delaware 19898(US)**

(72) Inventor: **Kosinski, Leonard Edward Raymond**
**7 Bethel Place**
**Washington, West Virginia 26181(US)**

(74) Representative: **Abitz, Walter, Dr.-Ing. et al**
**Abitz, Morf, Gritschneder, Freiherr von Wittgenstein Postfach 86 01 09**
**W-8000 München 86(DE)**

(54) **Polyacetal compositions containing at least one alkylated piperidinyl-s-triazine hindered amine light stabilizer.**

(57) Polyacetal compositions containing 0.05 to 5 weight percent of an alkylated piperidinyl-triazine hindered amine light stabilizer wherein the hindered $N^4$ atom in the piperidine ring of the stabilizer is alkylated with a $C_1$-$C_6$ alkyl group, preferably methyl, said compositions being relatively stable upon exposure to UV light. The compositions possess stability during melt processing and do not significantly lose physical properties upon exposure to heat and light.

EP 0 448 036 A1

## BACKGROUND OF THE INVENTION

### Technical Field

This invention relates to certain polyacetal compositions containing at least one alkylated piperidinyl-s-triazine hindered amine light stabilizer, said compositions being characterized as having good stability upon exposure to light. Further, and most surprisingly, certain other properties, such as melt processing stability and retention of physical properties upon exposure to heat and light, possessed by a polyacetal polymer are not significantly sacrificed when the alkylated piperidinyl-s-triazine hindered amine light stabilizer of the present invention is incorporated therein. Hereinafter, the term "hindered amine light stabilizer" shall be referred to as "HALS".

Polyacetal, also commonly referred to as polyoxymethylene, compositions are generally understood to include compositions based on homopolymers of formaldehyde, the terminal groups of which are end-capped by esterification or etherification, as well as copolymers of formaldehyde or of cyclic oligomers of formaldehyde and other monomers that yield oxyalkylene groups with at least two adjacent carbon atoms in the main chain, the terminal groups of which copolymers can be hydroxyl terminated or can be end-capped by esterification or etherification. The proportion of the comonomers can be up to 20 weight percent. Compositions based on polyacetals of relatively high molecular weight, i.e., 10,000 to 100,000 are useful in preparing semi-finished and finished articles by any of the techniques commonly used with thermoplastic materials, e.g. compression molding, injection molding, extrusion, blow molding, rotational molding, melt spinning, stamping and thermoforming. Finished articles made from such compositions possess desirable physical properties, including high stiffness, strength, low coefficient of friction, and good solvent resistance.

In some applications, polyacetal compositions are exposed to light for long periods of time. It is desired that said polyacetal compositions remain relatively stable upon exposure to light for such periods of time. The stability of a polyacetal composition upon exposure to light can be measured by the weight loss it experiences upon exposure to UV light and/or its color fastness. To impart or improve light stability to a polyacetal composition, HALS may be added added to the polyacetal compositions. However, it is not uncommon that the addition of such HALS can adversely affect other properties of the polyacetal composition, such as the melt processing stability (e.g., gaseous formation evolution or discoloration during melt processing) of said composition and/or the retention of the physical properties of said composition upon exposure to heat and air.

It has been found, in the present invention, that the inclusion of an alkylated piperidinyl-s-triazine HALS into a polyacetal results in a polyacetal composition having good stability upon exposure to light, as measured by weight loss upon exposure to UV light and/or color fastness. Further, it has been found that the inclusion of the alkylated piperidinyl-s-triazine HALS into polyacetal does not significantly adversely affect the other properties, such as the melt processing stability and the retention of physical properties upon exposure to heat and air of the polyacetal composition.

### Background Art

U.S. Patent 4,547,548 discloses polycondensation compounds containing piperidine and triazine groups for use as anti-actinic stabilizers for incorporation into polymeric materials. There is no recognition that use of a polycondensation compound, wherein the $N^4$ atom in the piperidine ring is alkylated, in polyacetal results in a polyacetal with properties that are improved over those polyacetal compositions containing a polycondensation compound wherein the $N^4$ atom in the piperidine ring is unalkylated (i.e., is of secondary amine functionality).

## SUMMARY OF THE INVENTION

The present invention relates to polyacetal compositions containing (a) 95.0 to 99.95 weight percent of a polyacetal polymer and (b) 0.05 to 5.0 weight percent of hindered amine light stabilizer containing a piperidine ring wherein the $N^4$ nitrogen atom is alkylated with a $C_1$-$C_6$ alkyl and further containing an s-triazine ring. The component (b) is preferably selected from hindered amine light stabilizers having structure (I) or structure (II), as follows:

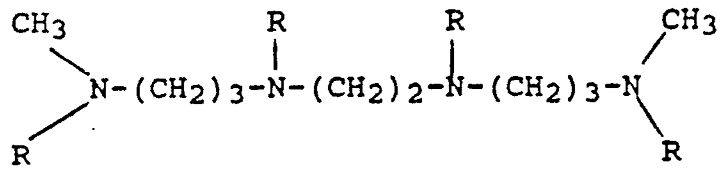

where
R =

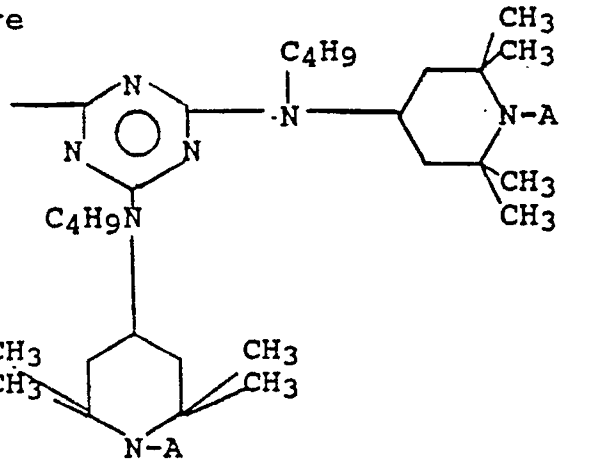

where A represents $C_1$-$C_6$ alkyl, preferably methyl.

(I)

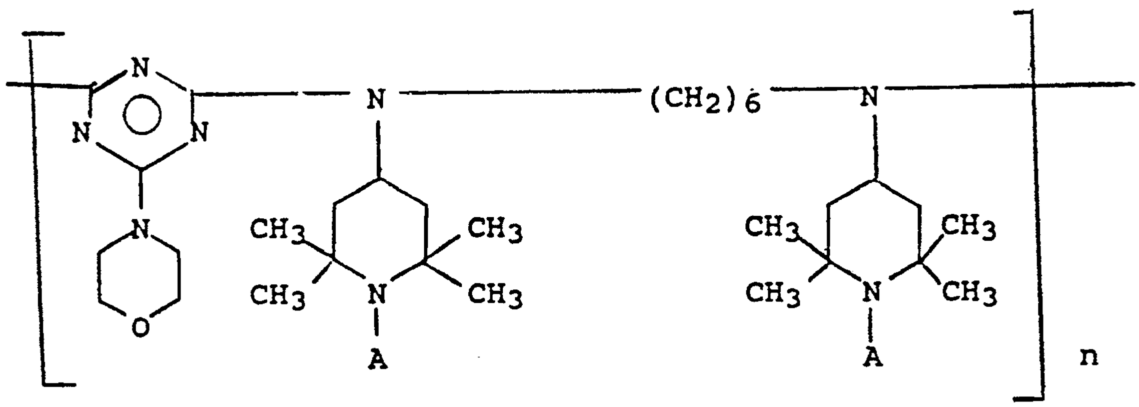

where A = $C_1$-$C_6$ alkyl, preferably methyl, and n corresponds to a number average molecular weight of between 600 to 12,000, preferably of between 1,500 to 8,000, and most preferably of between 2,000 to 6,000.

(II)

The compositions of the present invention possess good light stability and do not suffer a significant loss of certain other properties inherent in the polyacetal, such as melt processing stability and/or retention of physical properties upon exposure to heat and light, when the hindered amine light stabilizer compound is incorporated therein.

## DETAILED DESCRIPTION OF THE INVENTION

This invention relates to certain polyacetal compositions containing alkylated piperidine-s-triazine hindered amine light stabilizers and characterized as having good stability upon exposure to light, said compositions also not suffering a significant loss in the melt processing stability of polyacetal or the retention of physical properties upon exposure to heat and air. By "alkylated piperidine" it is meant that the

hindered amine in the piperidine ring (hereinafter referred to as the $N^4$ atom) is alkylated with a $C_1$-$C_6$ alkyl group, as shown in (III), below. Further, with the exception of the s-triazine ring in the HALS useful in the compositions of the present invention, all amine functionalities in said HALS should be of tertiary amine functionality. Further, it is recommended that the ratio of piperidine rings to triazine rings in the HALS useful in the compositions of the present invention should be 3:1 or less, preferably 2:1 or less, and most preferably, 2:1.

(III)

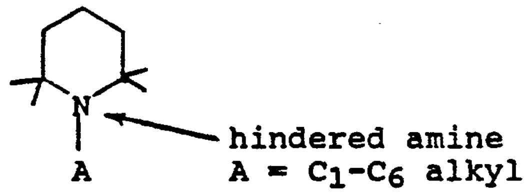


More specifically, the preferred embodiment of this invention relates to polyacetal compositions light stabilized with the alkylated piperidine-s-triazine HALS represented by (I) and (II), above.

The Compositions

The composition of the present invention consists essentially of (a) 95.0 to 99.95 weight percent of a polyacetal polymer and (b) 0.05 to 5.0 weight percent of an alkylated piperidinyl-s-triazine HALS selected from (I) or (II) as follows:

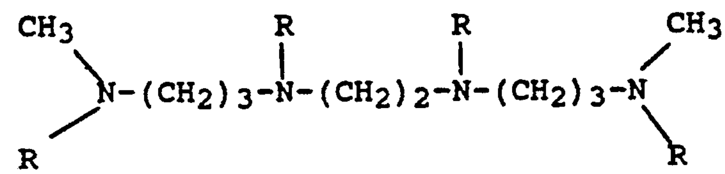

where R =

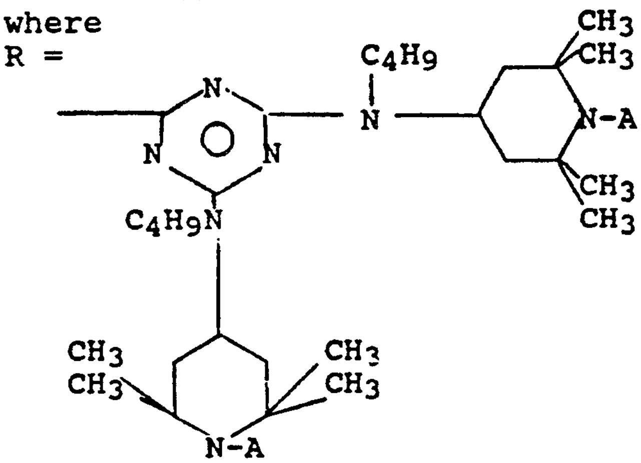

where A represents $C_1$-$C_6$ alkyl, preferably methyl.

(I)

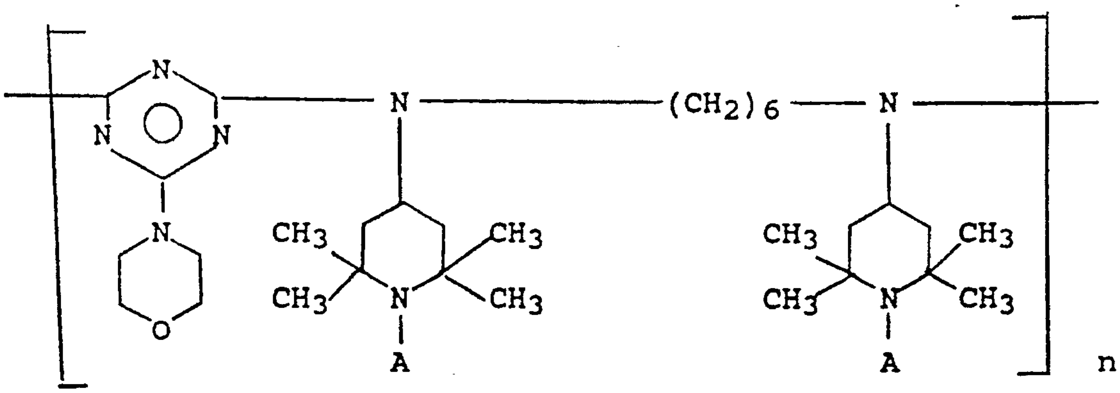

**where A = $C_1$-$C_6$ alkyl, preferably methyl,** and n corresponds to a number average molecular weight of between 600 to 12,000, preferably of between 1,500 to 8,000, and most preferably of between 2,000 to 6,000.

**(II)**

Preferably, this composition consists essentially of 96.5 to 99.95 weight percent component (a) and 0.05 to 3.5 weight percent component (b). More preferably, this composition consists essentially of 98.0 to 99.95 weight percent (a) and 0.05 to 2.0 weight percent component (b). All the above weight percents are based upon the amount of component (a) and (b) only.

Component (a). Polyacetal

The term "polyacetal" as used herein includes homopolymers of formaldehyde or of cyclic oligomers of formaldehyde, the terminal groups of which are end-capped by esterification of etherification, and copolymers of formaldehyde or of cyclic oligomers of formaldehyde and other monomers that yield oxyalkylene groups with at least two adjacent carbon atoms in the main chain, the terminal groups of which copolymers can be hydroxyl terminated or can be end-capped by esterification or etherification.

The polyacetals used in the compositions of the present invention can be branched or linear and will generally have a number average molecular weight in the range of 10,000 to 100,000, preferably 20,000 to 75,000. The molecular weight can conveniently be measured by gel permeation chromatography in m-cresol at 160°C using a Du Pont PSM bimodal column kit with nominal pore size of 60 and 1000 Å. Although polyacetals having higher or lower molecular weight averages can be used, depending on the physical and processing properties desired, the polyacetal molecular weight averages mentioned above are preferred to provide optimum balance of good mixing of the various ingredients to be melt blended into the composition with the most desired combination of physical properties in the molded articles made from such compositions.

As indicated above, the polyacetal can be either a homopolymer, a copolymer or a mixture thereof. Copolymers can contain one or more comonomers, such as those generally used in preparing polyacetal compositions. Comonomers more commonly used include alkylene oxides of 2-12 carbon atoms and their cyclic addition products with formaldehyde. The quantity of comonomer will not be more than 20 weight percent, preferably not more than 15 weight percent, and most preferably about 2 weight percent. The most preferred comonomer is ethylene oxide. Generally polyacetal homopolymer is preferred over copolymer because of its greater stiffness. Preferred polyacetal homopolymers include those whose terminal hydroxyl groups have been end-capped by a chemical reaction to form ester or ether groups, preferably acetate or methoxy groups, respectively.

Component (b). Alkylated Piperidyl-s-Triazine HALS

As stated above, the particular type of HALS useful in the compositions of the present invention contain an alkylated piperidine ring and an s-triazine. The piperidine ring is alkylated with a $C_1$-$C_6$ alkyl, preferably a methyl group.

The preferred alkylated piperidine-s-triazine HALS useful in the present invention have the structure (I) or (II), as follows:

where R =

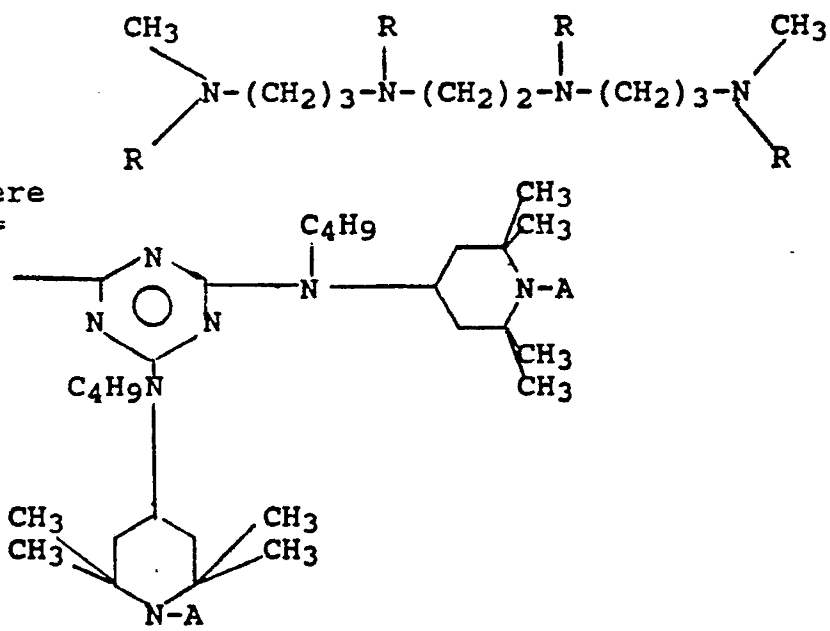

where A represents $C_1$-$C_6$ alkyl, preferably methyl.

(I)

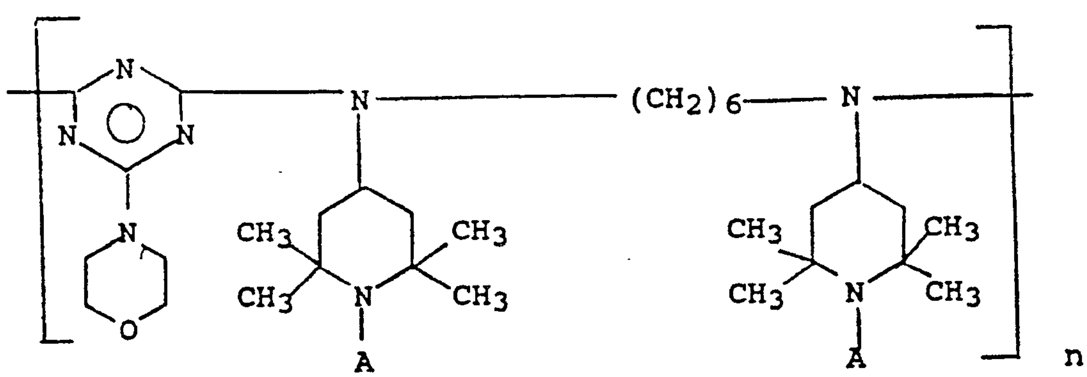

where A = $C_1$-$C_6$ alkyl, preferably methyl, and n corresponds to a number average molecular weight of between 600 to 12,000, preferably of between 1,500 to 8,000, and most preferably of between 2,000 to 6,000.

(II)

The HALS of structure (I) is preferred and the HALS of structure (I) wherein A represents methyl is most preferred.

HALS containing an alkylated piperidine ring and an s-triazine ring are commercially available or can be prepared by techniques readily available to those in the art. The HALS of structures (I) and (II), when A represents hydrogen, are commercially available compounds. The alkylated derivatives of the HALS of

structures (I) and (II) can be prepared from the commercially available compounds or can be prepared by techniques readily available to those in the art.

Purity of the Compositions

It is important that the alkylated piperidine-s-triazine HALS used in the compositions of the present invention be substantially free of compounds which destabilize acetal resins. Destabilizing impurities that are likely to occur in said HALS that are useful in the compositions of the present invention can be assayed via (1) the pH of an aqueous suspension of 1-10 weight percent said HALS, (2) the non-volatile ash content of said HALS, and/or (3) the heavy metal content of said HALS.

More specifically, it is recommended that for optimum results, the pH of an aqueous suspension (also referred to as aqueous suspension pH) containing 1-10 weight percent of the alkylated piperidine-s-triazine HALS useful in the compositions of the present invention be in the range of 5-8 for homopolymer polyacetal and in the range of 5-10 for copolymer polyacetal. It is more preferred that the pH of the suspension be in the range of 5-7.5 for both homopolymer and copolymer polyacetal. It is recommended that the non-volatile ash content (ashing is conducted at greater than or equal to 800° C) of the stabilizer be less than 0.25%, more preferably less than 0.10%, and most preferably less than 0.02%. It is also recommended that the heavy metal content of the PIP-T HALS be less than 10 ppm. For maximum thermal stability results, it is recommended that the non-volatile ash content and the heavy metal content of the alkylated piperidine-s-triazine HALS be minimized.

In stabilizing ester-capped or partially ester-capped polyacetal homopolymer, the alkylated piperidine-s-triazine HALS should be substantially free of basic materials which can destabilize the polyacetal. Basic impurities should preferably be removed to levels of not more than 200 ppm and most preferably to not more than 10 ppm, measured on a dry weight alkylated piperidine-s-triazine HALS basis. In stabilizing polyacetal copolymer or homopolymer that is substantially all ether-capped, higher concentrations of basic materials in said HALS can be tolerated. In addition, it should be understood that if the impurity in said HALS is only weakly basic relatively higher amounts can be tolerated. In any event, the pH range of an aqueous suspension of the alkylated piperidine-s-triazine HALS used herein should be maintained within the pH ranges described above.

In using the alkylated piperidine-s-triazine HALS in both homopolymer and copolymer polyacetal, acidic impurities in said-HALS should be minimized. Acidic impurities should preferably be removed to levels of not more than 250 ppm and most preferably to not more than 10 ppm. As with the basic impurities, it should be understood that if the impurity in said HALS is only weakly acidic, relatively higher amounts can be tolerated. In any event, the pH range of an aqueous suspension of the alkylated piperidine-s-triazine HALS used herein should be maintained within the ranges described above.

Accordingly, when such acidic and/or basic impurities are present in the alkylated piperidine-s-triazine HALS in amounts large enough to cause destabilization of the polyacetal compositions, said HALS should be purified before it is introduced into compositions of the present invention. Volatile impurities in said HALS can be removed by use of a vacuum oven. Ionic, non-volatile impurities in said HALS can be reduced in amount by washing or extracting said HALS with water. Non-ionic, non-volatile impurities can be reduced in amount by techniques readily available to those skilled in the art.

It should be understood that the compositions of the present invention can include, in addition to the polyacetal and the alkylated piperidine-s-triazine HALS, other ingredients, modifiers and additives as are generally used in polyacetal molding resins, including thermal stabilizers, anti-oxidants, pigments, colorants, toughening agents, reinforcing agents, UV stabilizers, hindered amine stabilizers, nucleating agents, lubricants, glass fibers, and fillers. It should also be understood that some pigments and colorants can, themselves, adversely affect the stability of polyacetal compositions.

Thermal stabilizers of particular interest include polyamide stabilizers, especially nylon terpolymers, hydroxy-containing polymers such as those described in U.S. Patents 4,766,168 and 4,814,397, and non-meltable nitrogen-containing or hydroxy-containing polymers, such as those described in European Patent Application Publication No. 0,388,809, and non-meltable naturally occurring polymers.

The inclusion of a mixed antioxidant system into the compositions of the present invention can also impart additional beneficial properties to the polyacetal compositions of the present invention. The mixed antioxidant system should be comprised of an N,N'-hexamethylene bis(3,S-di-tert-butyl-4-hydroxy-hydrocinnamide) antioxidant and at least one other hindered phenol type antioxidant, such as triethyleneglycol bis-3-(3'-tert-butyl-4'-hydroxy-5'-methylphenyl) proprionate or tetrakis(methylene(3,5-di-tert-butyl-4-hydroxy-hydrocinnamate))methane. Other hindered phenol type antioxidants are known in the art.

Further, a UV absorber in combination with the alkylated piperidine-s-triazine HALS useful in the

compositions herein can impart a UV resistance to the composition that is superior to the UV resistance of polyacetal containing an equivalent amount of either the UV absorber or the PIP-T HALS useful herein. As such, for even further improved UV resistance, it may be advantageous to incorporate into the compositions of the present invention at least one UV absorber. UV absorbers are known and include benzotriazoles, such as 2-(3',5'-Bis(1-methyl-1-phenylethyl)-2'-hydroxyphenyl) benzotriazole; benzophenones, such as 2-Hydroxy-4-n-octoxybenzophenone; oxanilides (oxalic acid diamides), such as 2-ethoxy-S-tert-butyl-2'-ethyloxanilide and its mixture with 2-ethoxy-2'-ethyl-5,4'-di-tert-butyloxanilide; and mixtures of the above types of UV absorbers.

Preparation of the Compositions

The compositions of the present invention can be prepared by mixing the HALS useful herein with the polyacetal polymer at a temperature above the melting point of the polyacetal component of the compositions using any intensive mixing device conventionally used in preparing thermoplastic polyacetal compositions, such as rubber mills, internal mixers such as "Banbury" and "Brabender" mixers, single or multiblade internal mixers with a cavity heated externally or by friction, "Ko-kneaders", multibarrel mixers such as "Farrel Continuous Mixers", injection molding machines, and extruders, both single screw and twin screw, both co-rotating and counter rotating. These devices can be used alone or in combination with static mixers, mixing torpedoes and/or various devices to increase internal pressure and/or the intensity of mixing, such as valves, gates or screws designed for this purpose. Extruders are preferred. Of course, such mixing should be conducted at a temperature below which significant degradation of the polyacetal component of the composition will occur. Generally, polyacetal compositions are melt processed between 170° C to 280° C, preferably between 185° C to 240° C, and most preferably 195° C to 225° C.

Shaped articles can be made from the compositions of the present invention using any of several common methods, including compression molding, injection molding, extrusion, blow molding, rotational molding, melt spinning and thermoforming. Injection molding is preferred. Examples of shaped articles include sheet, profiles, rod stock, film, filaments, fibers, strapping, tape tubing and pipe. Such shaped articles can be post treated by orientation, stretching, coating, annealing, painting, laminating and plating. Such shaped articles and scrap therefrom can be ground and remolded.

Processing conditions used in the preparation of the compositions of the present invention and shaped articles made therefrom include melt temperatures of about 170-280° C, preferably 185-240° C, most preferably 200-230° C. When injection molding the compositions of the present invention, it is preferred that the mold be as cold as possible consistent with the intricacy of the shape being produced. Generally, the mold temperature will be 10-120° C, preferably 10-100° C, and most preferably about 50-90° C.

EXAMPLES

The following are the results of tests conducted with polyacetal compositions to determine the effectiveness of the alkylated piperidine-s-triazine HALS of the present invention. Also provided are test results on polyacetal compositions containing control stabilizers, which are similar types of stabilizers and which are also hindered amine light stabilizers but which are not within the scope of the present invention. Both the HALS of the present invention and the control stabilizers are generically referred to in the data tables that follow as hindered amine light stabilizers, or HALS. All temperatures are in degrees Celsius unless otherwise specified. Measurements have been rounded where appropriate.

The polyacetal polymer used in the examples below was as follows:

POLYACETAL "A" - an acetate end-capped homopolymer having a number average molecular weight of about 40,000.

The alkylated piperidine-s-triazine HALS of the present invention used in the examples below was as follows:

(1) HALS "A" was a commercially available methylated piperidinyl-triazine HALS having the following structure:

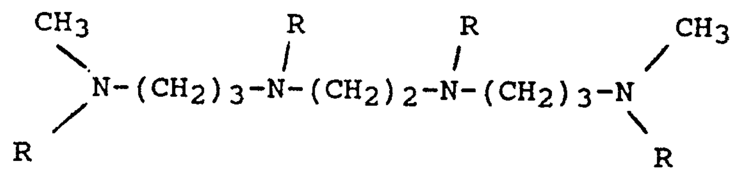

where
R =

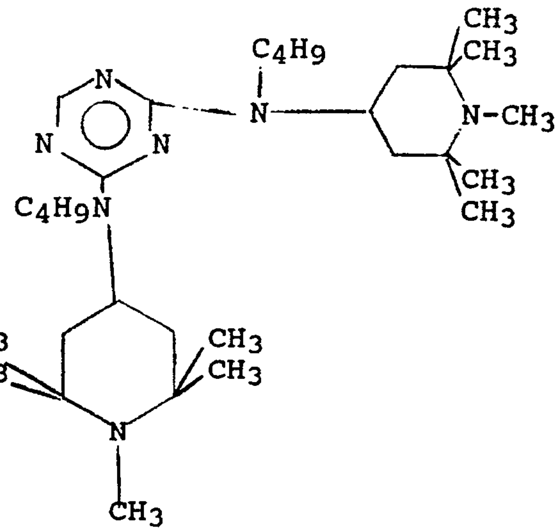

The pH of HALS A (measured on a 3.2% agueous suspension thereof) was about 6.7. In this HALS, the N[4] atom in the piperidine ring was methylated and as such, was a tertiary amine. All other amine functionalities in HALS A were of tertiary amine functionality.

The HALS compounds used in control examples were as follows:

(1) "C1" was a commercially available HALS (Tinuvin® 622) having the following structure:

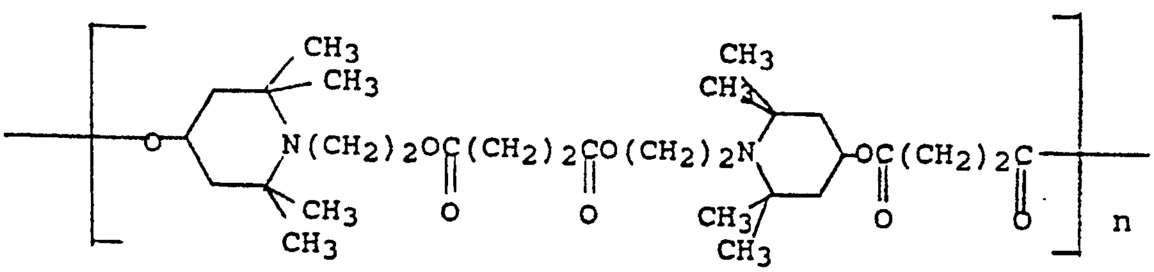

wherein n corresponds to a Mn of at least 2,500. The nitrogen in the piperidine ring was of tertiary amine functionality. However, no triazine ring was present in this structure.

(2) "C2" was a commercially available HALS (Chimassorb® 944) containing a piperidine ring and a triazine ring. The chemical name of "C2" was poly-((6-((1,1,3,3-tetramethylbutyl)-imino)-s-triazine-2,4-diyl)(2-(2,2,6,6-tetramethylpiperidinyl)-imino-hexa-methylene-(4-(2,2,6,6-tetramethylpiperidinyl)-imino)). It had the following structure:

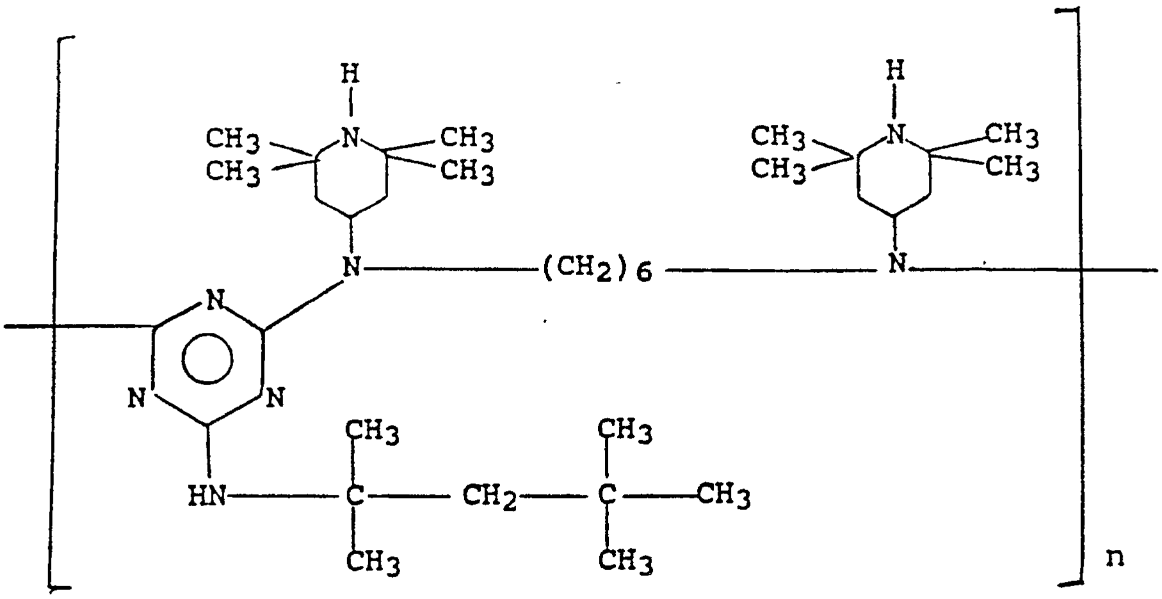

wherein n corresponds to a Mn of at least 2,300. The pH of C2 (measured on a 3.2% aqueous suspension thereof) was about 8.6. In this HALS, the $N^4$ atom in the piperidine ring was unalkylated and as such, was a secondary amine. Also, there was secondary amine functionality connecting the 1,1,3,3-tetramethylbutyl group to the s-triazine ring.

(3) "C3" was a commercially available HALS (Cyasorb UV 3346) containing a piperidine ring and an s-triazine ring. The chemical name of "C3" was poly-((6-((4-piperidone)-imino)-s-triazine-2,4-diyl)(2-(2,2,6,6-tetramethylpiperidinyl)-imino-hexamethylene-(4-(2,2,6,6-tetramethylpiperidinyl)-imino)). It had the following structure:

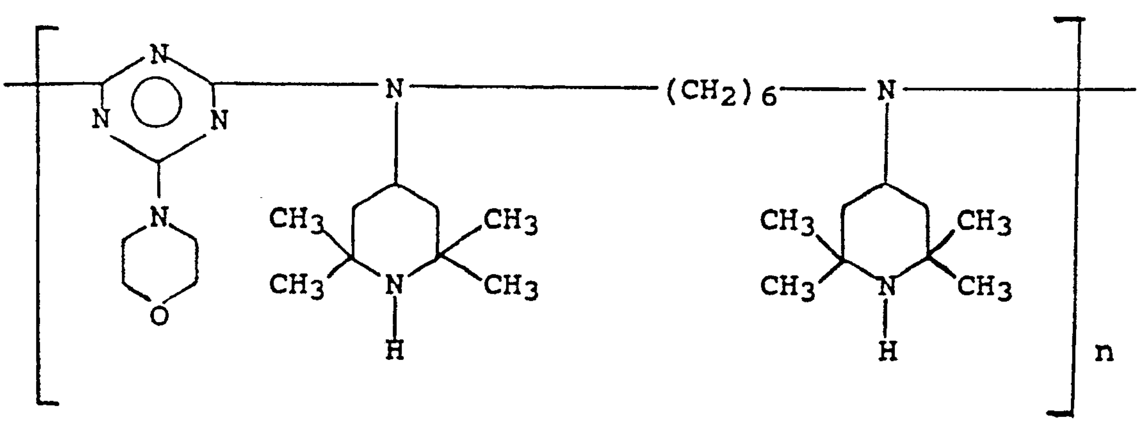

wherein n corresponds to a Mn of at least 2,200.

The pH of C3 (measured on a 3.2% aqueous suspension thereof) was about 9.5. In this HALS, the $N^4$ atom in the piperidine ring was unalkylated and as such, was a secondary amine.

Thermal stabilizers used in the examples below were as follows:

(1) THERMAL STABILIZER "A" was a nylon terpolymer.

(2) THERMAL STABILIZER "B" was an ethylene vinyl alcohol polymer.

The antioxidants used in the examples below were as follows:

(1) ANTIOXIDANT "A" was triethyleneglycol bis-3(3'-tert-butyl-4'-hydroxy-5'-methylphenyl) proprionate.

(2) ANTIOXIDANT "B" was N,N'-hexamethylene bis(3,5-di-tert-butyl-4-hydroxyhydrocinnamide).

(3) ANTIOXIDANT "C" was tetrakis(methylene(3,5-di-tert-butyl-4-hydroxy-hydrocinnamate))methane.

(4) ANTIOXIDANT "D" was 4,4'-butylidene-bis(6-tert-butyl-m-cresol).

The thermal stability of all the compositions tested was determined using a thermally evolved formaldehyde test procedure. A weighed sample of the polyacetal composition to be tested was placed in a tube and the tube was fitted with a cap for introduction of nitrogen to the test sample for removal of any

evolved gases from the apparatus while maintaining the sample in an oxygen-free environment. The tube that contained the sample was heated at 250° C or 259° C in a silicone oil bath. The nitrogen and any evolved gases transported thereby were bubbled through 75 ml of a 40 g/liter sodium sulfite in water solution. Any evolved formaldehyde reacts with the sodium sulfite to liberate sodium hydroxide. The sodium hydroxide was continuously neutralized with standard 0.1 N HCl. The results were obtained as a chart of ml of titer versus test time. The percent evolved formaldehyde was calculated by the formula

$$(V)(N)\ \frac{0.03 \times 100}{SW}$$

where
V = the volume of titer in milliliters
N = the normality of the titer, and
SW = the sample weight in grams.

The factor "0.03" is the milliequivalent weight of formaldehyde in g/milliequivalent. Thermally evolved formaldehyde results are conveniently reported after fifteen minutes and after thirty minutes heating. The results are reported in the tables below under "Wt % $CH_2O$ @ x° C".

EXAMPLES 1-2. EFFECT OF UV LIGHT AND MELT PROCESSING ON POLYACETAL CONTAINING HALS

The components for Examples 1-2 and Control Examples C1-C2 are listed in Table IA, below. The samples were prepared as follows: the components were mixed together and melt compounded on a 28 mm Werner and Pfleiderer twin screw extruder with barrel temperature settings of 150 degrees Celsius to 180 degrees Celsius, die temperature settings of 200 degrees Celsius, and screw speeds of 150 rpms. The temperature of the melt as it exited the die ranged from 210 degrees Celsius to 220 degrees Celsius.

The samples were tested for thermally evolved formaldehyde, described above, to determine their stability under melt processing conditions.

The samples were also tested to determine weight loss after UV exposure. Samples for the weight loss after UV exposure test were molded plaques having dimensions of 5 cm x 8.1 cm x 4 mm. The molded plaques weighed between 21.9 to 22.5 grams and the surface finish of said plaques was a textured surface resembling automotive vinyl. The textured side of the plaque was exposed to a UV light source at a prescribed amount (i.e., 100, 200, or 300 kJ/m$^2$, as specified in Table IB, below). All samples were subjected to UV exposure in the same apparatus, operated under the same conditions. Samples from each example were run simultaneously to eliminate test variation errors. Samples were weighed prior to testing. The samples were all subjected to accelerated UV exposure in an Atlas Ci65 Xenon Arc Weatherometer, operated as per SAE J1885 (Automotive Interior Conditions), with a quartz inner filter and a borosilicate outer filter. Pertinent details of the SAE J1885 method appear directly below as follows:

| | Light Cycle | Dark Cycle |
|---|---|---|
| Irradiance (Watts/m$^2$) | 0.55 | - |
| Black Panel Temp (°C) | 89 | 38 |
| Relative Humidity (%) | 50 | 100 |
| Cycle Time (hours) | 3.8 | 1.0 |

The calculation of sample exposure in terms of irradiation is as follows:

0.55 W/m$^2$ = 0.55 J/(m$^2$-s)

0.55 x $10^{-3}$ kJ/(m$^2$-s) x (3600 s)/(1 light hour) = 1.98 kJ/m$^2$ per light hour

where W = watt, m$^2$ = meter squared, J = Joule, s = second, kJ = kilojoule.

Weight loss after after UV exposure at the prescribed amount detailed in Table IB, below was determined by weighing the sample after exposure to UV light at the prescribed amount and then calculating percent weight loss by the following formula: (((unexposed sample weight) - (exposed sample weight))/(unexposed sample weight)) x 100%. Weight loss is a standard test for studying polyacetal UV degradation.

The results in Table 1A show HALS A of this invention causes less thermal destabilization of the

polyacetal composition relative to the secondary amine C2 and C3 HALS.

The results in Table 1B show that HALS a provides better UV resistance, as measured by weight loss and appearance retention, relative to the secondary amine C2 and C3 HALS.

TABLE IA

| Eg. No. | Wt % PAC | Wt % HALS | Wt % $CH_2O$ @259°C 15 Min | Wt % $CH_2O$ @259°C 30 Min |
|---|---|---|---|---|
| C1 | 100A | - | 1.07 | 2.57 |
| C2 | 99.5A | 0.5 C2 | 2.95 | 5.42 |
| C3 | 99.5A | 0.5 C3 | 2.54 | 4.95 |
| 1 | 99.5A | 0.5 A | 1.14 | 3.01 |
| 2 | 99.0A | 1.0 A | 1.72 | 3.65 |

PAC = Polyacetal
HALS = Hindered Amine Light Stabilizer

TABLE IB

| Eq. No. | Wt % PAC | Wt% HALS | Wt Loss After UV Exposure 100 kJ/m2 | 200 kJ/m2 | 300 kJ/m2 | Appearance 100 kJ/m2 | 200 kJ/m2 | 300 kJ/m2 |
|---|---|---|---|---|---|---|---|---|
| C1 | 100A | - | 0.61 | 1.56 | 4.31 | chalked | moderately chalked | heavily chalked |
| C2 | 99.5A | 0.5 C2 | 0.37 | 0.72 | 1.19 | V | II, V | III, V |
| C3 | 99.5A | 0.5 C3 | 0.34 | 0.71 | 1.68 | V | II, V | IV, V |
| 1 | 99.5A | 0.5 A | 0.10 | 0.19 | 0.77 | - | I, V | III, V |
| 2 | 99.0A | 1.0 A | 0.10 | 0.26 | 0.75 | - | V | III, V |

PAc = Polyacetal
HALS = Hindered Amine Light Stabilizer
Appearance Codes:
plaques were examined using 7x magnification
I = crazed - hairline cracking as a continuous line, no fissure evident
II = lightly cracked, two sides of the crack separated by narrow fissure
III = moderately cracked, cracks with fissures visible to the naked eye, confirmed under magnification
IV = Very heavily cracked; extremely visible to the naked eye
V = edge cracking, cracks on edges of plaque clearly visible to the naked eye

EXAMPLES 3-5. EFFECT OF HALS on POLYACETAL AGING

The components of Examples 3-5 and Control Examples C4-C6 are listed below in Table II. Additionally, except for compositions C5 and C6, the compositions each contained polyacetal A, 0.5% of a polyethylene-glycol lubricant, 0.13% of antioxidant C, 0.6% of a benzotriazole-type UV absorber, 0.25% of thermal stabilizer A, and 0.75% of thermal stabilizer B. Compositions C5 and C6 contained, in addition to the components listed in Table II, polyacetal A, 1,5% of thermal stabilizer A, 0.5% of thermal stabilizer B, 0.13% of antioxidant D, 0.6% of the same benzotriazole-type UV absorber of Examples 3-5, and 0.5% of a polyethylene-glycol lubricant.

The sample compositions were prepared as follows: all components were mixed together and melt compounded on a two and one-half inch Sterling single screw extruder with barrel temperature settings ranging from 120 degrees Celsius to 180 degrees Celsius, die temperature settings of 200 degree Celsius, and screw speeds of 150 rpms. The temperature of the melt as it exited the die ranged from 210 degrees Celsius to 220 degrees Celsius.

Samples were tested for thermally evolved formaldehyde, as described above.

Samples were also subjected to air oven aging studies. For the air oven aging studies, the melt compounded samples were molded into 1/8 inch thick tensile bars. The tensile bars for each composition were preweighed and placed in a circulating air oven at 130 degrees Celsius for the times noted in Table II, below. Oven location effects were averaged by distributing bars of a sample throughout the oven. At the end of the specified time period, the tensile bars were removed from the oven, weighed, and tested for tensile strength and elongation according to ASTM Method D-638 (0.2 in/min crosshead speed). The percent weight loss was calculated as (1-((weight after aging)/(weight before aging))) x 100.

The results in Table II show that HALS C2 and C3 destabilize polyacetal relative to HALS A of Examples 3, 4, and 5, as measured by thermally evolved formaldehyde. Moreover, the HALS A gives superior weight retention and physical property retention to polyacetal relative to the HALS C2 and C3, as shown by the air oven aging data.

TABLE II

| No. | Wt % HALS | Wt% UV Absorber | Wt % $CH_2O$ @259°C 15 Min | Wt % $CH_2O$ @259°C 30 Min | Air Oven Aging @130°C 0 Days % E | 0 Days TS | 20 Days % Wt. Loss | 20 Days % E | 20 Days TS | 40 Days % Wt. Loss | 40 Days % E | 40 Days TS |
|---|---|---|---|---|---|---|---|---|---|---|---|---|
| C4 | - | - | 0.11 | 0.40 | 36.2 | 9.5 | 0.51 | 5.0 | 9.1 | 1.33 | 2.5 | 7.1 |
| 3 | 0.15 A | 0.15 A | 0.06 | 0.32 | 47.2 | 9.2 | 1.05 | 2.6 | 6.5 | 2.94 | 2.3 | 5.8 |
| 4 | 0.3 A | 0.3 A | 0.18 | 0.57 | 38.0 | 9.3 | 1.03 | 2.1 | 6.1 | 3.25 | 1.5 | 5.1 |
| 5 | 0.6 A | 0.6 A | 0.10 | 0.49 | 43.0 | 9.1 | 1.30 | 1.9 | 6.0 | 3.66 | 1.5 | 4.0 |
| C5 | 0.6 C2 | 0.6 A | 0.29 | 1.82 | 33.9 | 9.1 | 2.98 | 2.5 | 7.4 | 8.35 | n/m | n/m |
| C6 | 0.6 C3 | 0.6 A | 0.31 | 1.61 | 30.6 | 9.0 | 4.71 | 1.7 | 5.9 | 10.44 | (a) | (a) |

HALS = Hindered Amine Light Stabilizer
* units of tensile strength = kpsi
n/m = not measurable; very brittle
(a) - bars cracked and curled into semi-circles

EXAMPLES 8-9. EFFECT OF HALS ON CHANGE IN LIGHTNESS OF POLYACETAL

The components of Examples 8-9 and Control Examples C7-C10 are disclosed in Table IV, below. Additionally, these compositions contained polyacetal A, 1.5% thermal stabilizer B, 0.5% thermal stabilizer

A, 0.13% antioxidant as specified in Table IV, 0.6% of the same benzotriazole-type UV absorber as in Examples 3-5, above, 0.6% HALS as specified in Table IV, and 1.0% of the same polyethylene-glycol lubricant used in Examples 3-5, above.

Samples were tested for thermally evolved formaldehyde, described above.

Samples were also tested for yellowness index (YI) and lightness index (LI). YI and LI was measured from melt compounded, pelletized samples on a Hunterlab M-25 Spectrocolorimeter as per ASTM-D 1923. Yellowness increases as the YI value obtained increases and lightness increases as sample whiteness increases, with an LI of 100 being a perfectly white sample.

The results in Table IV, below, show the melt processing thermal stability of polyacetal compositions containing the HALS A of the present invention to be at least 4 times better (at 30 minutes of testing) than for polyacetal compositions containing the control HALS C2 and C3, both of which contain piperidine rings and triazine rings but have secondary amine functionality in the piperidine ring.

Table IV results also show that HALS C2 and C3 impart more yellowness and reduced lightness to the polyacetal than does HALS A of the present invention, as shown by comparison of the YI and LI numbers (Example 6 versus Examples C7 and C9; Example 7 versus Examples C8 and C10).

TABLE III

| Eg. No. | HALS | AO | Wt % $CH_2O$ @ 259° C 15 min | 30 min | YI/LI |
|---|---|---|---|---|---|
| 6 | A | C | 0.04 | 0.28 | 8.3/83.3 |
| C7 | C2 | C | 0.47 | 2.20 | 16.5/79.7 |
| C9 | C3 | C | 0.69 | 1.73 | 16.7/79.8 |
| 7 | A | D | 0.10 | 0.39 | 9.1/82.6 |
| C8 | C2 | D | 0.52 | 2.12 | 17.3/78.4 |
| C10 | C3 | D | 0.66 | 1.69 | 14.0/77.7 |

HALS = hindered amine light stabilizer
AO = antioxidant

## Claims

**1.** A composition consisting essentially of

(a) 95.0 to 99.95 weight percent of a polyacetal polymer and

(b) 0.05 to 5.0 weight percent of a piperidinyl-s-triazine hindered amine light stabilizer selected from compounds having structure (I) or Structure (II) as follows:

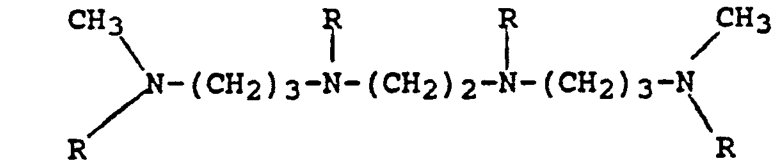

where
R =

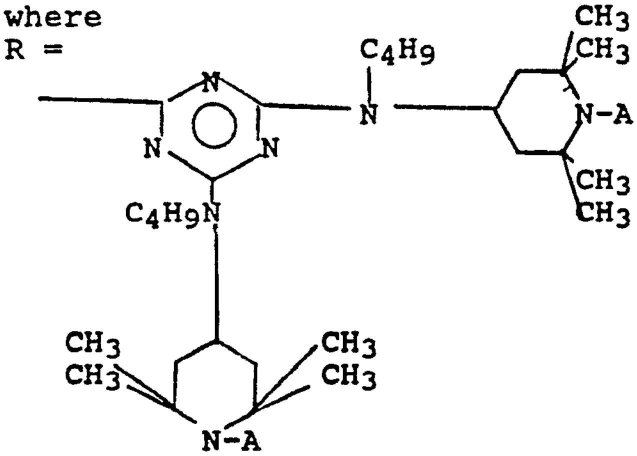

(I)

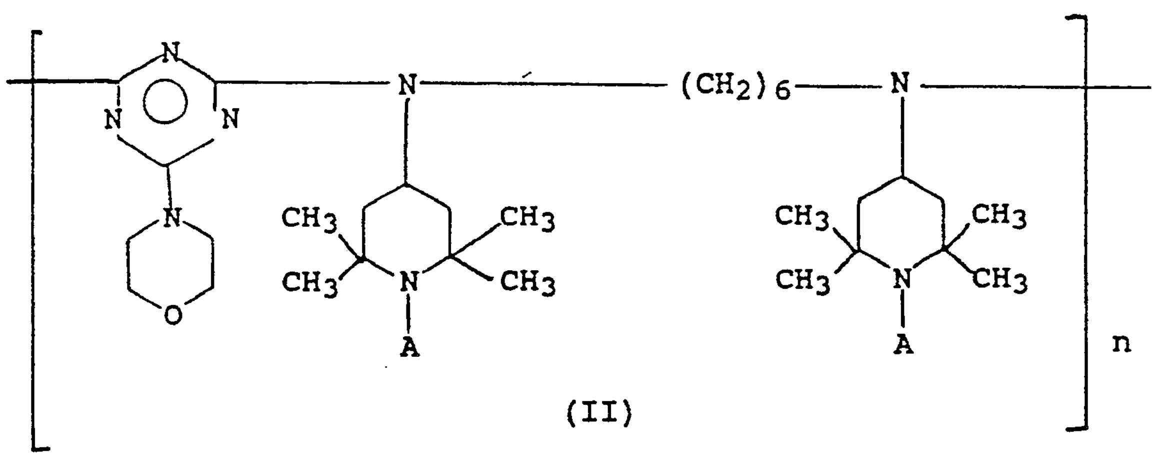

(II)

wherein the weight percents given above are based upon the weight of components (a) and (b) only, wherein A represents $C_1$-$C_6$ alkyl, and n corresponds to a number average molecular weight of between 600 to 12,000, and provided that the component (b) hindered amine light stabilizer has a pH of 5-10, as measured on an aqueous suspension thereof.

2. The composition of Claim 1 wherein the component (a) polyacetal is a homopolymer and the pH of the component (b) hindered amine light stabilizer is 5-8.

3. The composition of Claim 1 wherein the component (a) polyacetal is a copolymer.

4. The composition of Claim 1 wherein A of component (b) is a methyl group.

5. The composition of Claim 1 wherein the component (b) hindered amine light stabilizer is of structure (II).

6. The composition of Claim 1 wherein the component (b) hindered amine light stabilizer is of structure (I).

7. The composition of Claim 1 further comprising at least one of thermal stabilizers, antioxidants, pigments, colorants, toughening agents, reinforcing agents, UV stabilizers, hindered amine stabilizers, nucleating agents, lubricants, glass fibers, and fillers.

8. The composition of Claim 1 further comprising an antioxidant mixture comprised of N,N'-hexamethylene bis(3,5-di-tert-butyl-4-hydroxy-hydrocinnamide) and at least one hindered phenol type antioxidant.

9. The composition of Claim 1 further comprising an ultraviolet absorber selected from the class consisting of benzotriazole-based UV absorbers, benzophenone-based UV absorbers, oxanilide-based UV absorbers, and mixtures thereof.

10. Shaped articles made from the compositions of Claim 1.

European Patent Office

# EUROPEAN SEARCH REPORT

Application Number

**EP 91 10 4233**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,D | GB-A-2 194 237 (CIBA-GEIGY AG)<br>* page 5, lines 54 - 55 * * page 10, line 10 *<br>- - - | 1-10 | C 08 K 5/3492<br>C 08 K 5/357<br>C 08 L 59/02 |
| Y | EP-A-0 151 042 (POLYPLASTICS CO. LTF.)<br>* page 12, table 5, examples 30-31 *<br>- - - | 1-10 | |
| Y | EP-A-0 319 480 (CIBA-GEIGY AG)<br>* page 17, example 14 *<br>- - - - - | 1-10 | |
| | | | TECHNICAL FIELDS SEARCHED (Int. Cl.5) |
| | | | C 08 G<br>C 08 K<br>C 08 L |

The present search report has been drawn up for all claims

| Place of search | Date of completion of search | Examiner |
|---|---|---|
| The Hague | 24 June 91 | HOFFMANN K.W. |

CATEGORY OF CITED DOCUMENTS

X: particularly relevant if taken alone
Y: particularly relevant if combined with another document of the same catagory
A: technological background
O: non-written disclosure
P: intermediate document
T: theory or principle underlying the invention

E: earlier patent document, but published on, or after the filing date
D: document cited in the application
L: document cited for other reasons

&: member of the same patent family, corresponding document